# EUROPEAN PATENT SPECIFICATION

(11) **EP 2 595 493 B1**
(45) Date of publication and mention of the grant of the patent: **30.04.2014**
(21) Application number: 11728237.6
(22) Date of filing: 21.06.2011
(51) Int. Cl.: A23C 11/02

(54) **LIQUID CREAMER COMPOSITION AND PROCESS**
FLÜSSIGE KAFFEEWEISSERZUSAMMENSETZUNG UND VERFAHREN
COMPOSITION ET TRAITEMENT DE SUCCÉDANÉ DE CRÈME LIQUIDE

(30) Priority: 23.07.2010 WO PCT/US2010/043068
(43) Date of publication of application: 29.05.2013
(73) Proprietor: Nestec S.A., 1800 Vevey (CH)
(72) Inventor: SHER, Alexander A., Dublin OH 43017 (US); BEESON, Christine Ann, Marysville OH 43040 (US); OCTAVIA, Winnie, Delaware Ohio 43015 (US); GUTIERREZ, J. Antonio, Dublin Ohio 43017 (US)
(74) Representative: Elleby, Gudrun
(86) International application number: PCT/EP2011/060356
(87) International publication number: WO 2012/010378

(56) References cited:
- EP-A1- 0 875 150
- US-B2- 6 824 810

## Description

### Field of the invention

The present invention relates to a liquid creamer composition, useful e.g. for adding to a hot or cold beverage.

### Background

Creamers are widely used with hot and cold beverages, e.g. coffee, cocoa, tea, to whiten the beverage and impart a desired flavour and texture. They also often used with cereals instead of milk and/or dairy cream. Creamers may have variety of flavors and may provide different mouthfeel, and texture. Creamers can be in liquid or powder forms. A disadvantage of using powder creamers may include difficulties in dissolution when added to coffee, and also possibility of having non homogeneous beverage. Fresh or refrigerated dairy creamers usually provide good mouthfeel; however, they are unacceptable for people with dairy intolerance and are inconvenient in use due to short storage capabilities.

The market of non-dairy coffee creamers is rapidly growing. A desired creamer should be shelf-stable during storage without phase separation, creaming, color change, gelation or sedimentation, and should retain a constant viscosity over time. When added to cold or hot beverages such a coffee, tea, the creamer should dissolve rapidly, provide a good whitening capacity, and remain stable with no feathering and/or sedimentation and provide a superior taste. EP 0 457 002 and US 3,935,325 describe coffee creamers which comprise water, vegetable oil, protein or protein hydrolysates, carbohydrates, buffering salt, emulsifiers and other ingredients. However, these coffee whiteners are generally not suited for aseptic treatment. It is with well known that emulsions and suspensions are not thermodynamically stable, therefore there is a big challenge to overcome emulsion instability issues, especially for the aseptic products during long storage times, especially at elevated temperatures. This is especially challenging for creamers with a relatively low fat content, which is often desired for health reasons. Titanium dioxide is often added to such creamers to achieve sufficient whitening effect, but titanium dioxide may be perceived as an unwanted additive. WO 2007/044782 and WO 2009/068543 describe non-dairy, aseptic liquid creamers containing titanium dioxide to increase the whitening effect.

There is a need for a homogeneous liquid creamer which can impart a sufficient whitening effect even without the addition of titanium dioxide and which is stable for a long time if aseptically processed.

### Summary of the invention

The inventors have found that a specific combination of oil, protein, sugars, stabilisers and emulsifiers can be used to produce a liquid creamer with good whitening effect, pleasant sensory characteristics, and which is stable during aseptical processing and subsequent storage at ambient temperature. Consequently, the present invention relates to a liquid creamer composition comprising: a) between about 4% and about 10% of vegetable oil; b) between about 0.1% and about 3% of protein; c) between about 1% and about 5% of maltodextrin; d) between about 0.1% and about 30% of sucrose; e) between about 0.002% and about 0.2% of lambda carrageenan; f) between about 0.02% and about 1% of gum Arabic; and g) between about 0.05% and 1% of low molecular emulsifier. The invention further relates to a method of producing a liquid creamer composition.

### Detailed description of the invention

### Vegetable oil

The liquid creamer composition of the present invention comprises between about 4% and about 10% (weight/weight) of vegetable oil, preferably between about 6% and about 8%. The vegetable oil may be any suitable vegetable oil and may comprise partially or wholly hydrogenated oil. In a preferred embodiment the vegetable oil comprises one or more of soybean oil, coconut oil, palm oil, palm kernel oil, corn oil, cotton seed oil, canola oil, olive oil, sunflower oil, safflower oil, and blends thereof.

### Protein

The liquid creamer composition of the present invention further comprises between about 0.1 % and about 3% (weight/weight) of protein, preferably between about 0.2% and about 2%, such as between about 0.5% and about 2%. The protein may be any suitable protein such as e.g. milk proteins such as casein, caseinate and whey proteins; grain proteins such as wheat, rice, rye, backwheat, oat, barley, millet, and corn proteins; legume proteins such as soy, or pea, proteins; and egg proteins. In a preferred embodiment the protein comprises caseinate, e.g. sodium caseinate, potassium caseinate, or calcium caseinate.

### Sugars

Reducing sugars are often avoided in creamers which contain protein and are to be treated at high temperatures, due to the risk of browning by Maillard reactions between the reducing sugars and protein. However, the present inventors have found that with the combination of maltodextrins and sucrose in specific amounts, browning effects are avoided and at the same time a suitable flavour and mouthfeel can be achieved, which is not possible using only sucrose. The inventors also found that the presence of maltodextrins, especially maltodextrins of low DE, contributes positively to the physical stability of the system against phase separation and feathering. The liquid creamer composition of the present invention comprises between about 0.1 % and about 30% (weight/weight) of sucrose, preferably between about 0.5% and about 15%, more preferably between 1% and 5%. The composition further comprises between about 0.5% and about 5% (weight/weight) of maltodextrins, preferably between about 1% and about 3%. The maltodextrins preferably has a dextrose equivalent value (DE) of between about 2 and about 20. Maltodextrins are usually produced by the hydrolysis of starches, and DE is a measure of the percentage of reducing sugars in the product. DE describes the degree of conversion of starch into glucose and a DE value of 100 corresponds to complete conversion into glucose.

### Stabilisers

The inventors have found that an acceptable stability during heat treatment needed for aseptic production of a creamer of the present invention with its relatively low level of fat is achieved when a combination of lambda carrageenan and gum Arabic is used in specific amounts. This is especially the case when the creamer does not comprise titanium dioxide. The liquid creamer composition of the present invention comprises between about 0.002% and about 0.2% (weight/weight) of lambda carrageenan, preferably between about 0.01% and about 0.05% (weight/weight) of lambda carrageenan; and between about 0.02% and about 1% (weight/weight) of gum Arabic, preferably between about 0.1 % and about 0.5% (weight/weight) of gum Arabic.

### Emulsifiers

A low molecular emulsifier is needed in the liquid creamer composition of the present invention to improve stability of the oil in water emulsion. Normally, to achieve a good emulsification of oil in water, emulsifiers with a high HLB value (hydrophilic/lipophilic balance) should be chosen. However, the inventors have found that in the composition of the present invention a combination of a low molecular emulsifier with low HLB value and one with a medium HLB value improves the physical stability of the composition of the present invention. HLB value is a measure of the balance between hydrophilic and lipophilic properties of the emulsifier and is a value ranging from 0 to 20. Low molecular weight emulsifiers with low HLB values are e.g. mono- and diglycerides of fatty acids. Examples of low molecular weight emulsifiers with medium HLB values are e.g. diacetyl tartaric acid esters of monoglycerides of fatty acids, succinic acid esters of monoglycerides, citric acid esters of monoglycerides, and lactic acid esters of monoglycerides. In the context of the present invention low HLB values are HLB values below 6, while medium HLB values are HLB values from 6 to 12. An acceptable stability of the liquid creamer composition of the invention is achieved when the low molecular weight emulsifier is used in combination with maltodextrins, lambda carrageenan, gum Arabic and protein as specified herein. The liquid creamer composition of the present invention comprises low molecular emulsifiers in an amount of between about 0.05% and about 1% (weight/weight), preferably in an amount of between about 0.1 % and about 0.6% (weight/weight). Low molecular emulsifiers are emulsifiers of relatively low molecular weight as opposed to e.g. proteins. For the purposes of the present invention low molecular weight emulsifiers are emulsifiers with a molecular weight below 1000, preferably below 500. The low molecular emulsifiers may e.g. comprise monoglycerides of fatty acids, diglycerides of fatty acids, diacetyl tartaric acid esters of monoglycerides of fatty acids, succinic acid esters of monoglycerides, citric acid esters of monoglycerides, and/or lactic acid esters of monoglycerides. In a preferred embodiment the low molecular emulsifier comprises monoglycerides of fatty acids and diglycerides of fatty acids in a ratio of between 7:1 and 10:1. In another preferred embodiment the low molecular emulsifier comprises monoglycerides of fatty acids and diacetyl tartaric acid esters of monoglycerides of fatty acids in a ratio of between 1:2 and 1:5.

The liquid creamer composition of the present invention may comprise additional ingredients suitable for inclusion in a liquid creamer composition. Additional ingredients are e.g. flavours; salts, e.g. buffer salts, e.g. phosphates, such as e.g. di-potassium phosphate. In a preferred embodiment the creamer composition of the invention comprises between about 0.1 % and about 1% of salts selected from mono- and diphospates, mono- and bicarbonates, and combinations thereof.

The liquid creamer composition of the present invention preferably does not contain titanium dioxide. Titanium dioxide is often used in creamer composition to achieve a sufficient whitening effect of the creamer, e.g. when it is mixed with a beverage such as coffee, cocoa, or tea. The whitening effect of creamers with relatively low fat content, such as the present creamer composition, without titanium dioxide is often not comparable to the whitening effect of dairy creamers with high fat content, for this purpose titanium dioxide is often added. The inventors of the present creamer composition have found that this specific composition has a good whitening effect even without the addition of titanium dioxide. By not containing titanium dioxide is meant that the liquid creamer composition is substantially free of titanium dioxide, i.e. that the liquid creamer is completely free of titanium dioxide or that the amount of titanium dioxide is too low to achieve any visual effect on the whiteness of the liquid creamer composition.

The liquid creamer composition of the present invention is preferably an aseptic creamer composition. By aseptic is meant that the liquid creamer composition does not contain live microorganisms capable of changing the chemical composition and/or physical properties of the liquid creamer composition, or capable of infecting a human consuming the liquid creamer. A number of techniques for producing aseptic liquid compositions are known in the art, and any suitable method may be used. Some methods are described below. When the liquid creamer composition of the present invention is an aseptic liquid creamer composition it is preferably stable for at least 9 months at 20°C, 3 months at 30°C, and/or 1 month at 38°C, when protected against light. By stable is meant that no phase separation, creaming, gelation, or colour change is visually detectable.

A liquid creamer of the invention can be produced by a) dissolving the required amounts of protein, maltodextrins, sucrose, lambda carrageenan, gum Arabic, and low molecular emulsifier in water; b) adding liquid, or melted, vegetable oil in the required amount to the liquid obtained in step a); and c) homogenising the composition obtained in step b) to obtain a liquid emulsion. Using the disclosure above of the composition of a liquid creamer composition of the invention, the skilled person can calculate the needed amounts of ingredients to be use for the production of the composition by methods well known in the art. Methods for dissolving the ingredients in water, adding oil and homogenising the composition are well known in the art and can easily be adapted by the skilled person to the specific composition in question. By the word "dissolving" as used above is meant that the ingredients are dissolved and/or evenly dispersed in the liquid, not necessarily that a solution in a strict chemical sense is achieved.

If an aseptic liquid creamer composition is desired, the method may further comprise heat treating the composition obtained from step b), before or after step c), at conditions sufficient to obtain an aseptic liquid creamer composition. Such conditions are well known to the skilled person and include UHT (ultra high temperature) treatment and retorting (e.g., treatment for 5-35 minutes at 121-125°C). In the case of retorting, the product may be heat treated in the consumer package, in the case of UHT treatment the product will be aseptically filled into the packaging. Methods for aseptic filling and packaging are well known in the art.

### EXAMPLES

### Example 1

A dry blend of lambda carrageenan with sucrose was prepared by mixing together 2000 g of sucrose with 20 g of lambda-carrageenan and 100 g of gum arabic. The dry blend was added into 58 kg of hot water (∼75°C) under high agitation. Then, 600 g of di-potassium phosphate was added to the tank under continuous agitation.

Next, a dry blend of other powder ingredients was prepared by mixing together 1000 g of sodium caseinate, and 400 g of flavors. The dry blend was added to the tank of hot water with above stabilizers under high agitation. After∼10 minutes of mixing, emulsifiers (50 g of DIMODAN® (distilled monoglycerides of fatty acids, from Danisco A/S, Denmark) and 150 g of PANODAN® (Diacetyl Tartaric Acid Esters of monoglycerides of fatty acids, from Danisco A/S, Denmark) were added into the tank under continuous high agitation. Further, 7 kg of oil (melted at ∼ 60°C) was added under high agitation, followed by 2000 g of maltodextrin with a DE of 10. A small amount of additional water was added to adjust the total product amount to 100 kg.

The liquid was pre-heated, UHT treated for 5 sec at 143°C, homogenized at 180/40 bar, cooled, and the liquid creamer was aseptically filled into bottles.

The liquid creamer was stored 1 month at 38°C, 3 months at 30°C and nine months at room temperature. Physico-chemical stability and sensory properties of creamer was judged by non-trained panellists, judging both the liquid creamer alone and coffee beverage with added liquid creamer. No phase separation (creaming, de-oiling, marbling, etc), gelation, and practically no viscosity changes were found during the storage. It was found that the liquid creamer had good appearance, mouth-feel, smooth texture and a good flavor without "off'¬taste. Further, the creamer showed high whitening capacity when added to a coffee.

### Example 2

A dry blend of lambda carrageenan with sucrose was prepared by mixing together 2000 g of sucrose with 20 g of lambda-carrageenan and 200 g of gum arabic. The dry blend was added into 58 kg of hot water (∼75°C) under high agitation. Then, 600 g of di-potassium phosphate was added to the tank under continuous agitation.

Next, a dry blend of other powder ingredients was prepared by mixing together 800 g of sodium caseinate, and 400 g of flavors. The dry blend was added to the tank of hot water with above stabilizers under high agitation. After∼10 minutes of mixing, emulsifiers (50 g of DIMODAN® (distilled monoglycerides of fatty acids, from Danisco A/S, Denmark) and 150 g of PANODAN® (Diacetyl Tartaric Acid Esters of monoglycerides of fatty acids, from Danisco A/S, Denmark) were added into the tank under continuous high agitation. Further, 7 kg of oil (melted at ∼ 60°C) was added under high agitation, followed by 2000 g of maltodextrin with a DE of 10. A small amount of additional water was added to adjust the total product amount to 100 kg.

The liquid was pre-heated, UHT treated for 5 sec at 143°C, homogenized at 180/40 bar, cooled, and the liquid creamer was aseptically filled into bottles.

The liquid creamer was stored 1 month at 38°C, 3 months at 30°C and nine months at room temperature. Physico-chemical stability and sensory properties of creamer was judged by non-trained panellists, judging both the liquid creamer alone and coffee beverage with added liquid creamer. No phase separation (creaming, de-oiling, marbling, etc), gelation, and practically no viscosity changes were found during the storage. It was found that the liquid creamer had good appearance, mouth-feel, smooth texture and a good flavor without "off'¬taste. Further, the creamer showed high whitening capacity when added to a coffee.

### Example 3

A coffee whitener was prepared as in Example 1 but using kappa-carrageenan instead of lambda-carrageenan. Physico-chemical stability and sensory properties of liquid creamer and coffee beverage with added liquid creamer was judged by non-trained panelists. After 2-months storage at 30°C, the sensory evaluation showed gelation and creaming in the bottle.

### Example 4

A coffee whitener was prepared as in Example 1 but using a blend of kappa- and iota-carrageenan instead of lambda-carrageenan. Physico-chemical stability and sensory properties of liquid creamer and coffee beverage with added liquid creamer was judged by non-trained panelists. After 3-months storage at 20°C, the sensory evaluation showed creaming in the bottle. When added to coffee, a significant decrease of whitening capacity as compared to the fresh made liquid coffee creamer was observed.

### Example 5

A coffee whitener was prepared as in Example 1 but using total of 1200 g of gum arabic. Physico-chemical stability and sensory properties of liquid creamer and coffee beverage with added liquid creamer was judged by non-trained panelists. After 3-months storage at 20°C, the sensory evaluation showed significant gelling and creaming in the bottle. When added to coffee, a significant decrease of whitening capacity as compared to the fresh made liquid coffee creamer was observed.

### Example 6

A coffee whitener was prepared as in Example 1 but using 4.0 kg of sodium caseinate. Physico-chemical stability and sensory properties of liquid creamer and coffee beverage with added liquid creamer was judged by non-trained panelists. After 3-weeks storage at 38°C, the sensory evaluation showed flocculation in the bottle. Further, a significant increase of viscosity the liquid creamer was observed.

### Example 7

A coffee whitener was prepared as in Example 1 but using 11 kg of maltodextrin. Physico-chemical stability and sensory properties of liquid creamer and coffee beverage with added liquid creamer was judged by non-trained panelists. After production, the sensory evaluation showed that creamer is not acceptable due to starchy aftertaste.

### Example 8

A coffee whitener was prepared as in Example 1 but using total of 20 g of both emulsifiers. Physico-chemical stability and sensory properties of liquid creamer and coffee beverage with added liquid creamer was judged by non-trained panelists. After 3-weeks storage at 38°C, the sensory evaluation showed severe creaming in the bottle.

## Claims

1. A liquid creamer composition comprising:
a) between 4% and 10% of vegetable oil;
b) between 0.1% and 3% of protein;
c) between 1% and 5% of maltodextrin;
d) between 0.1 % and 30% of sucrose;
e) between 0.002% and 0.2% of lambda carrageenan;
f) between 0.02% and 1% of gum Arabic; and
g) between 0.05% and 1% of low molecular emulsifier.

2. The creamer composition of claim 1 wherein the low molecular emulsifier comprises one or more of monoglycerides of fatty acids, diglycerides of fatty acids, and diacetyl tartaric acid esters of monoglycerides of fatty acids.

3. The creamer composition of any of claim 1 or 2 wherein the low molecular emulsifier comprises monoglycerides of fatty acids and diglycerides of fatty acids in a ratio of between 7:1 and 10:1.

4. The creamer composition of any of the preceding claims wherein the low molecular emulsifier comprises monoglycerides of fatty acids and diacetyl tartaric acid esters of monoglycerides of fatty acids in a ratio of between 1:2 and 1:5.

5. The creamer composition of any of the preceding claims wherein the maltodextrins have a dextrose equivalent value (DE) of between 2 and 20.

6. The creamer composition of any of the preceding claims wherein the protein comprises caseinate.

7. The creamer composition of any of the preceding claims wherein the vegetable oil comprises one or more of soybean oil, coconut oil, palm oil, palm kernel oil, corn oil, cotton seed oil, canola oil, olive oil, sunflower oil, safflower oil, and blends thereof.

8. The creamer composition of any of the preceding claims further comprising between 0.1 % and 1% of salts selected from mono- and diphospates, mono- and bicarbonates, and combinations thereof.

9. The creamer composition of any of the preceding claims wherein the creamer composition is an aseptic creamer composition.

10. The creamer composition of any of the preceding claims which does not contain titanium dioxide.

11. A method of preparing a liquid creamer composition according to any of the preceding claims comprising:
a) dissolving the required amounts of protein, maltodextrins, sucrose, lambda carrageenan, gum Arabic, and low molecular emulsifier in water;
b) adding liquid or melted vegetable oil in the required amount to the liquid obtained in step a); and
c) homogenising the composition obtained in step b) to obtain a liquid emulsion.

12. The method of claim 11 further comprising heat treating the composition obtained from step b), before or after step c), at conditions sufficient to obtain an aseptic liquid creamer composition.

## Patentansprüche

1. Flüssige Kaffeeweißer-Zusammensetzung aufweisend:
a) zwischen 4% und 10% eines Pflanzenöls;
b) zwischen 0,1% und 3% Proteine;
c) zwischen 1% und 5% Maltodextrine;
d) zwischen 0,1% und 30% Saccharose;
e) zwischen 0,002% und 0,2% Lambda-Carrageenan;
f) zwischen 0,2% und 1% Gummi Arabikum, und
g) zwischen 0,05% und 1% eines niedermolekularen Emulgators.

2. Kaffeeweißer-Zusammensetzung nach Anspruch 1, wobei der niedermolekulare Emulgator eine oder mehrere aufweist von Monoglyceriden von Fettsäuren, Diglyceriden von Fettsäuren und Diacetylweinsäureester von Monoglyceriden von Fettsäuren.

3. Kaffeeweißer-Zusammensetzung nach Anspruch 1 oder 2, wobei der niedermolekulare Emulgator Monoglyceride von Fettsäuren und Diglyceride von Fettsäuren im Verhältnis zwischen 7:1 und 10:1 aufweist.

4. Kaffeeweißer-Zusammensetzung nach einem der vorangegangenen Ansprüche, wobei der niedermolekulare Emulgator Monoglyceride von Fettsäuren und Diacetylweinsäureester von Monoglyceriden von Fettsäuren im Verhältnis zwischen 1:2 und 1:5 aufweist.

5. Kaffeeweißer-Zusammensetzung nach einem der vorangegangenen Ansprüche, wobei die Maltodextrine einen Dextrose Equivalenzwert (DE) zwischen 2 und 20 aufweisen.

6. Kaffeeweißer-Zusammensetzung nach einem der vorangegangenen Ansprüche, wobei das Protein Caseinat aufweist.

7. Kaffeeweißer-Zusammensetzung nach einem der vorangegangenen Ansprüche, wobei das Pflanzenöl eines oder mehreres aufweist von Sojabohnenöl, Kokosöl, Palmöl Palmkernöl, Maisöl, Baumwollkernöl, Rapsöl, Olivenöl, Sonnenblumenöl und Verschnitte davon.

8. Kaffeeweißer-Zusammensetzung nach einem der vorangegangenen Ansprüche, weiterhin aufweisend zwischen 0,1% und 1% Salz, ausgewählt aus Mono- und Diphosphaten, Mono und Bikarbonaten und Kombinationen daraus.

9. Kaffeeweißer-Zusammensetzung nach einem der vorangegangenen Ansprüche, wobei die Kaffeeweißer- Zusammensetzung eine keimfreie Zusammensetzung ist.

10. Kaffeeweißer-Zusammensetzung nach einem der vorangegangenen Ansprüche, welche kein Titandioxid enthält.

11. Verfahren zur Herstellung einer Kaffeeweißer-Zusammensetzung entsprechend einem der vorangegangenen Ansprüche, aufweisend:
a) Lösung der benötigten Mengen von Protein, Maltodextrinen, Saccharose, Lambda Carrageenan, Gummi Arabicum und niedermolekularem Emulgator in Wasser;
b) Zugabe von flüssigem oder geschmolzenem Pflanzenöl in der benötigten Menge zur der in Schritt a) erhaltenen Flüssigkeit; und
c) Homogenisierung der Zusammensetzung der in Schritt b) erhaltenen flüssigen Emulsion.

12. Verfahren nach Anspruch 11, weitergehend aufweisend eine Hitzebehandlung der in Schritt b) vor oder nach Schritt c) erhaltenen Zusammensetzung unter hinreichenden Bedingungen zum Erhalt einer keimfreien flüssigen Kaffeeweißer-Zusammensetzung.

## Revendications

1. Composition de colorant à café liquide comprenant :
a) entre 4% et 10% d'huile végétale;
b) entre 0,1% et 3% de protéine;
c) entre 1% et 5% de maltodextrine;
d) entre 0,1% et 30% de saccharose;
e) entre 0,002% et 0,2% de carraghénine lambda;
f) entre 0,02% et 1% de gomme arabique, et
g) entre 0,05% et 1% d'émulsifiant de faible poids moléculaire.

2. Composition de colorant à café selon la revendication 1, dans lequel l'émulsifiant de faible poids moléculaire comprend un ou plusieurs éléments parmi les monoglycérides d'acides gras, diglycérides d'acides gras, et esters d'acide diacétyl tartrique de monoglycérides d'acides gras.

3. Composition de colorant à café selon l'une quelconque des revendications 1 ou 2, dans laquelle l'émulsifiant de faible poids moléculaire comprend des monoglycérides d'acides gras et des diglycérides d'acides gras dans un rapport compris entre 7:1 et 10:1.

4. Composition de colorant à café selon l'une quelconque des revendications précédentes, dans laquelle l'émulsifiant de faible poids moléculaire comprend des monoglycérides d'acides gras et des esters d'acide diacétyl tartrique de monoglycérides d'acides gras dans un rapport compris entre 1:2 et 1:5.

5. Composition de colorant à café selon l'une quelconque des revendications précédentes, dans laquelle les maltodextrines ont une valeur d'équivalent en dextrose (DE) comprise entre 2 et 20.

6. Composition de colorant à café selon l'une quelconque des revendications précédentes, dans laquelle la protéine comprend du caséinate.

7. Composition de colorant à café selon l'une quelconque des revendications précédentes, dans laquelle l'huile végétale comprend un ou plusieurs éléments parmi l'huile de soja, huile de coco, huile de palme, huile de palmiste, huile de maïs, huile de graine de coton, huile de canola, huile d'olive, huile de tournesol, huile de carthame, et mélanges de celles-ci.

8. Composition de colorant à café selon l'une quelconque des revendications précédentes, comprenant en outre entre 0,1% et 1% de sels choisis parmi les mono- et diphosphates, mono- et bicarbonates, et combinaisons de ceux-ci.

9. Composition de colorant à café selon l'une quelconque des revendications précédentes, dans laquelle la composition de colorant à café est une composition de colorant à café aseptique.

10. Composition de colorant à café selon l'une quelconque des revendications précédentes, qui ne contient pas de dioxyde de titane.

11. Procédé de préparation d'une composition de colorant à café liquide selon l'une quelconque des revendications précédentes, comprenant :
a) la dissolution des quantités requises de protéine, maltodextrines, saccharose, carraghénine lambda, gomme arabique, et émulsifiant de faible poids moléculaire dans de l'eau;
b) l'ajout d'huile végétale liquide ou fondue dans la quantité requise au liquide obtenu à l'étape a); et
c) l'homogénéisation de la composition obtenue à l'étape b) pour obtenir une émulsion liquide.

12. Procédé selon la revendication 11, comprenant en outre un traitement thermique de la composition obtenue à l'étape b), avant ou après l'étape c), dans des conditions suffisantes pour obtenir une composition de colorant à café liquide aseptique.
